# EUROPÄISCHE PATENTANMELDUNG

(11) **EP 0 848 977 A2**
(43) Veröffentlichungstag der Anmeldung: **24.06.1998**
(21) Anmeldenummer: 97890250.0
(22) Anmeldetag: 17.12.1997
(51) Int. Cl.: B01D 33/073, B01D 33/50, E03F 5/14

(54) **Einrichtung zum Reinigen von Flüssigkeiten**

(30) Priorität: 20.12.1996 AT 2240/96
(71) Anmelder: ELIN ENERGIEVERSORGUNG GESELLSCHAFT m.b.H., 1141 Wien (AT)
(72) Erfinder: Gschanes, Franz, 8160 Weiz (AT); Winkler, Anton, 8160 Weiz (AT)
(74) Vertreter: Rieberer, Stefan, Dipl.-Ing.

(57) **Zusammenfassung**

Aufgabe der Erfindung ist es, eine Einrichtung zu schaffen, die bei Prozessen mit großem Wasserverbrauch deren Wirtschaftlichkeit erheblich verbessert.

In die Wand 1 des Absatzbeckens ist das als Ausleitung für das gereinigte Abwasser dienende Rohr 2 etwa waagrecht eingesetzt. Auf dem Rohr 2 ist eine Scheibe 5 drehbar angeordnet. Die Scheibe 5 weist an ihrem äußeren Umfang einen Zahnkranz 7 auf, der mit einem von einem Motor 8 angetriebenen Ritzel 9 in Eingriff steht. Weiters ist auf der Scheibe 5 ein das Rohr 2 konzentrisch umgebender Filterkorb 10 angeordnet. Der Filterkorb 10 kann aus einem großmaschigen Drahtgeflecht bestehen, wobei der Boden 12 des Filterkorbes 10 als runde Blechplatte ausgeführt ist. An das am Filterkorb 10 anliegende Filtermaterial 13 schließt eine mit Druckluft versorgte, parallel zum Rohr 2 verlaufende Düsenleiste 14 an. Die Düsenleiste 14 weist einzelne Bohrungen 15 auf, die die Druckluft dem Filtermaterial 13 zuführen. Durch die durch das Filtermaterial 13 durchtretende Druckluft werden die am Filtermaterial 13 abgelagerten Feststoffpartikel entfernt.

Mit der Erfindung ist es erstmals möglich den eigentlichen Filter kontinuierlich von den feinsten Feststoffpartikeln zu reinigen und so dessen Funktionalität über einen sehr großen Zeitraum zu gewährleisten.

## Beschreibung

Die Erfindung betrifft eine Einrichtung zum Reinigen von Flüssigkeiten, vorzugsweise Abwasser, insbesondere von Industrieabwasser, wie beispielsweise Galvanikabwässer, Lackierabwässer od. dgl.

In einigen industriellen Produktionszweigen, wie beispielsweise in der Galvanik oder auch in der Lackierindustrie werden große Mengen Wasser eingesetzt, die - mit zum Teil erheblichen Anteilen an Inhaltsstoffen belastet - als Abwasser anfallen.Unter ökologischen und wirtschaftlichen Gesichtspunkten stellt die Wiederaufbereitung derartiger Abwässer ein Problem mit ständig zunehmender Bedeutung dar. Bei der heute üblichen Abwasseraufbereitung erfolgt die Reinigung der Abwässer in einem kombinierten Fäll- und Abbauprozeß. Man fällt dabei, indem man dem Abwasser Fällund Flockungsmittel zusetzt, durch welche ein großer Teil der in Wasser gelösten oder dispergierten Ballaststoffe zusammen mit den Fäll- und Flockungsmitteln in eine leicht abtrennbare Form, meist in einem nichtschleimigen, flockigen Niederschlag umgewandelt werden.

So sind Verfahren zum Reinigen von Abwasser bekannt, die die Schadstoffe in einen innigen Kontakt mit einem Reagens bringen und dadurch die Schadstoffe aufschlämmen. Nachteilig bei diesem Verfahren ist, daß aufgrund der Löslichkeit mancher Reagens-Bestandteile ein Schlupf auftritt, der wegen der chemischen Auswirkungen auf Industrieprozesse unerwünscht ist.

Vorzugsweise am Ende eines derartigen Prozesses ist dann jeweils ein Filter, insbesondere ein Feinfilter vorgesehen, das die Fäll- und Flockungsmittel vom Wasser trennt.

Man kann also mit einer derartigen Behandlung des Abwassers die kommunalen Abwasseraufbereitungsanlagen erheblich entlasten.

Darüber hinaus kann man wegen des großen erzielbaren Effekts das Abwasser soweit reinigen, daß man es erneut oder sogar mehrere Male als Brauchwasser wieder einsetzen kann, sodaß lediglich Wasserverluste ausgeglichen werden müssen.

Ein Nachteil dieser oben aufgezeigten Verfahren ist jedoch darin zu sehen, daß durch die Reagentien bzw. der Fäll- und Flockungsmittel die Filter sehr rasch ihre Funktionalität verlieren. Eine oftmalige Erneuerung der Filter, insbesondere des Filterstoffes ist die Folge, wodurch auch Betriebsunterbrechungen auftreten.

Aufgabe der Erfindung ist es, eine Einrichtung der eingangs genannten Art zu schaffen, die einerseits die obigen Nachteile vermeidet und die anderseits bei Prozessen mit großem Wasserverbrauch deren Wirtschaftlichkeit erheblich verbessert.

Die erfindungsgemäße Einrichtung ist dadurch gekennzeichnet, daß ein als Ausleitung für das gereinigte Abwasser dienendes Rohr vorgesehen ist, auf dem eine Scheibe mit einem am Umfang angeordneten Zahnkranz drehbar angeordnet ist, daß auf der Scheibe ein das Rohr konzentrisch umgebender, mit einem mit Filtermaterial innen ausgekleideter Filterkorb angeordnet ist, daß an das am Filterkorb anliegende Filtermaterial eine mit Druckluft versorgte, parallel zum Rohr verlaufende Düsenleiste auf der Filterkorbinnenseite anschließt und daß der Filterkorb über einen Antrieb, der auf den Zahnkranz wirkt, drehbar ist. Mit der Erfindung ist es erstmals möglich den eigentlichen Filter kontinuierlich von den feinsten Feststoffpartikeln zu reinigen und so dessen Funktionalität über einen sehr großen Zeitraum zu gewährleisten.

Die über die Düsenleiste zugeführte Druckluft entfernt vom Filtermaterial die abgefilterten Partikel, sodaß ein,,Verlegen" des Filters nicht stattfinden kann. Durch die Drehbewegung des Filterkorbes wird das Filtermaterial stetig gereinigt. Die Feststoffpartikel gelangen entweder wieder in das Abwasser des Absetzbeckens oder sie können auch mit einer entsprechenden Absaugvorrichtung entfernt und entsorgt werden. Auch eine Wiederverwendung nach einer entsprechenden Aufbereitung ist denkbar.

Nach einer Ausgestaltung der Erfindung ist das Rohr in die Wand eines Absetzbeckens etwa waagrecht eingesetzt. Dadurch ist auch der Filterkorb im Abwasser waagrecht angeordnet, wobei das Abwasser etwa zu zwei Drittel des Durchmessers des Filterkorbes reicht.

Gemäß einem weiteren Merkmal der Erfindung ist das Filtermaterial für die Filterung kleinster Feststoffpartikel geeignet. Abgesehen davon, daß die gereinigte Abwasserqualität von der Durchlaßfähigkeit abhängt, ist die erfindungsgemäße Einrichtung dazu geeignet auch derartige Filtermaterialien zu reinigen.

Nach einer besonderen Ausgestaltung der Erfindung besteht der Antrieb aus einem von einem Motor angetriebenen Ritzel. Dieses Ritzel greift in den Zahnkranz der Scheibe ein und dreht den Filterkorb kontinuierlich. Gemäß einer weiteren Ausgestaltung der Erfindung sind die Zuführungen für die Druckluft im Inneren des Rohres geführt. Diese einfache Konstruktion ermöglicht die Druckluftzuführung zur Düsenleiste ohne großen Aufwand. Die dezimierte Durchflußweite ist dabei vernachlässigbar.

Nach einem besonderen Merkmal der Erfindung ist die Düsenleiste am Rohr angeordnet. Da das Rohr seitlich und auch nach unten gerichtete Öffnungen für den Eintritt des gereinigten Abwassers aufweist, ist eine Montage der Düsenleiste bei im Rohr verlegten Druckluftleitungen äußerst einfach.

Gemäß einem weiteren Merkmal der Erfindung weist die Düsenleiste einzelne Bohrungen auf, die die Druckluft dem Filtermaterial zuführen. Für eine kontinuierliche Reinigung des Filters ist es eine Grundvoraussetzung, daß über die zu reinigende Fläche ein gleichmäßiger Druckluftstrom gegeben ist.

Nach einer Ausgestaltung der Erfindung sind die Bohrungen der Düsenleiste über Kammern, die seitlich an der Düsenleiste angeordnet sind, mit Druckluft gleichmäßig versorgbar. Wie bereits erwähnt, ist eine gleichmäßige Druckluftbeaufschlagung für die Qualität maßgebend. Durch die Vorschaltung einer Kammer vor die Bohrungen ist ein Druckausgleich für die zu versorgenden Bohrungen gegeben. Es ist jedoch zu beachten, daß die Kammern eine entsprechende Größe aufweisen.

Gemäß einem weiteren Merkmal der Erfindung weist die Düsenleiste zum Filtermaterial hingerichtete Dichtlippen auf. Diese Dichtlippen verhindern einen Druckabbau der Druckluft nach dem Austritt aus den Bohrungen.

Gemäß einer besonderen Ausgestaltung der Erfindung ist über der Düsenleiste an der Außenseite des Filterkorbes eine Absaugvorrichtung für die Feststoffpartikel vorgesehen. Dadurch kann in einfachster Weise eine Entsorgung der Fäll- und Flockungsmittel erfolgen.

Nach einer weiteren Ausgestaltung der Erfindung erfolgt die Abdichtung des Rohres in der Wand des Absetzbeckens über einen Simmering. Diese herkömmliche Art einer Flüssigkeitsabdichtung hat sich auch bei dieser Konstruktion bestens bewährt.

Gemäß einem weiteren Merkmal der Erfindung erfolgt die Abdichtung des Filterkorbes an der Scheibe über einen 0-Ring. Wie auch eingangs erwähnt, ist die Qualität des gereinigten Abwassers von den Leckagen abhängig. So weist die Scheibe im Abstand zum Zahnkranz einen Absatz auf, auf dem der Filterkorb über beispielsweise einen Schlauchverbinder befestigt wird. Um nun Leckagen zu vermeiden, weist der Absatz eine Nut auf, in die der 0-Ring eingelegt wird. Dichtungsprobleme können hier also auf einfachste Weise vermieden werden.

Die Erfindung wird anhand von Ausführungsbeispielen, die in der Zeichnung dargestellt sind, näher erläutert. Die Fig. zeigt den prinzipiellen Aufbau einer Einrichtung zum Reinigen von Abwasser.

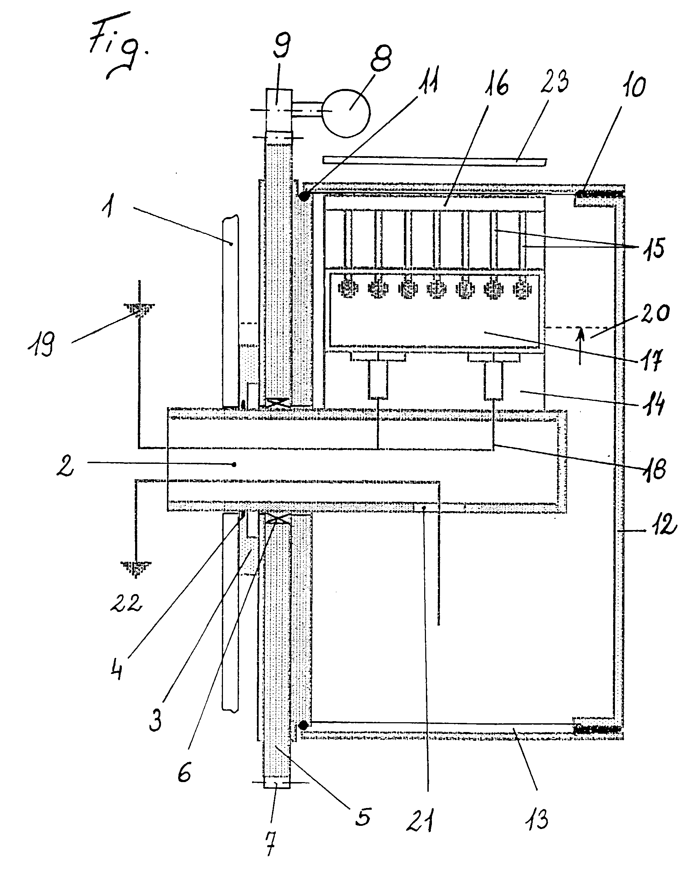

Gemäß der Fig. 1 ist die Einrichtung zum Reinigen von Abwasser in einem Absetzbecken, vorzugsweise im Letzten einer Abwasserreinigungsanlage vorgesehen. In die Wand 1 des Absatzbeckens ist das als Ausleitung für das gereinigte Abwasser dienende Rohr 2 etwa waagrecht eingesetzt. Die Abdichtung des Rohres 2 erfolgt über einen Flansch 3, wobei ein Simmering 4 als Dichtung Verwendung findet. Auf dem Rohr 2 ist eine Scheibe 5 drehbar angeordnet, wobei die Lagerung 6 der Scheibe 5 direkt am Rohr 2 vorgesehen ist. Die Scheibe 5 weist an ihrem äußeren Umfang einen Zahnkranz 7 auf, der mit einem von einem Motor 8 angetriebenen Ritzel 9 in Eingriff steht.

Weiters ist auf der Scheibe 5 ein das Rohr 2 konzentrisch umgebender Filterkorb 10 angeordnet. Die Scheibe 5 weist einen Absatz auf, in dem eine Nut für einen 0-Ring 11, der als Dichtung Verwendung findet, vorgesehen ist.

Der Filterkorb 10 kann aus einem großmaschigen Drahtgeflecht bestehen, das vorzugsweise eingerollt und an der Erzeugenden verschweißt ist. Der Boden 12 des Filterkorbes 10 ist als runde Blechplatte ausgeführt, wobei das Drahtgeflecht und der Boden 12 beispielsweise über Punktschweißungen verbunden sind. Vorteilhaft bei dieser Ausführung ist, daß das Filtermaterial 13 mit dem der Filterkorb 10 innen ausgekleidet wird, ebenfalls nur eingerollt und verklebt werden muß. Der Filterkorb 10 ist über eine - nicht dargestellte - Schlauchverbindung am Absatz der Scheibe 5 befestigt. Die Abdichtung erfolgt über den bereits erwähnten 0-Ring 11.

An das am Filterkorb 10 anliegende Filtermaterial 13 schließt eine mit Druckluft versorgte, parallel zum Rohr 2 verlaufende Düsenleiste 14 an. Die Düsenleiste 14 weist einzelne Bohrungen 15 auf, die die Druckluft dem Filtermaterial 13 zuführen. Durch die durch das Filtermaterial 13 durchtretende Druckluft werden die am Filtermaterial 13 abgelagerten Feststoffpartikel entfernt. Um nun zwischen dem Austritt der Druckluft aus den Bohrungen 15 und dem Filtermaterial 13 keinen zu großen Druckabfall zu erhalten, weist die Düsenleiste 14 Dichtlippen 16 auf.

Die Düsenleiste 14 mit ihren Bohrungen 15 ist am Rohr 2 angeordnet. Zur gleichmäßigen Versorgung der Bohrungen 15 weist die Düsenleiste 14 Kammern 17 auf, die seitlich an der Düsenleiste 14 angeordnet sind und in die die Zuführungen 18 für die Druckluft enden.

Die Zuführungen 18 selbst werden im Rohr 2 geführt, wie durch den Pfeil 19 angedeutet wird.

Da nicht zu viele Bohrungen 15 von einer Kammer 17 versorgt werden sollen, können auch mehrere Kammern 17 vorgesehen werden, wobei dann die Kammern 17 beidseits der Düsenleiste 14 angeordnet werden.

Prinzipiell erfolgt der Einbau der Einrichtung zum Reinigen von Abwasser derart, daß in einem Absetzbecken der Filterkorb 10 mit dem Filtermaterial 13 bis etwa zu zwei Drittel im Abwasser angeordnet ist, wobei durch den Pfeil 20 der Wasserspiegel angedeutet ist. Das Abwasser dringt durch das Filtermaterial 13 in den Filterkorb 10 ein, wobei die feinen Feststoffpartikeln im Filtermaterial 13 abgelagert werden. Das gereinigte Abwasser tritt über Öffnungen 21 in das Rohr 2 ein und wird ausgeleitet, was durch den Pfeil 22 angedeutet ist.

Das mit Feststoffpartikeln beladene Filtermaterial 13 wird über den Filterkorb 10 und den Antrieb kontinuierlich gedreht und gelangt derart über die Düsenleiste 14. Durch die Druckluft, die durch die Düsenleiste 14 zugeführt wird, wird das Filtermaterial 13 stetig gereinigt.

Die aus dem Filtermaterial 13 hinausgeblasenen Feststoffpartikeln gelangen wieder ins nicht gereinigte Abwasser oder werden über eine Absaugvorrichtung 23 aufgenommen.

Ein weiterer Vorteil bei dieser Einrichtung ist, der nicht unerwähnt bleiben soll, daß durch die Dichtlippen 16 das Filtermaterial 13 immer an den Filterkorb 10 gedrückt wird.

## Patentansprüche

1. Einrichtung zum Reinigen von Flüssigkeiten, vorzugsweise Abwasser, insbesondere von Industrieabwasser, wie beispielsweise Galvanikabwässer, Lackierabwässer od. dgl., dadurch gekennzeichnet, daß ein als Ausleitung für das gereinigte Abwasser dienendes Rohr (2) vorgesehen ist, auf dem eine Scheibe (5) mit einem am Umfang angeordneten Zahnkranz (7) drehbar angeordnet ist, daß auf der Scheibe (5) ein das Rohr (2) konzentrisch umgebender, mit einem mit Filtermaterial (13) innen ausgekleideter Filterkorb (10) angeordnet ist, daß an das am Filterkorb (10) anliegende Filtermaterial (13) eine mit Druckluft versorgte, parallel zum
Rohr (2) verlaufende Düsenleiste (14) auf der Filterkorbinnenseite anschließt und daß der Filterkorb (10) über einen Antrieb(8, 9), der auf den Zahnkranz (7) wirkt, drehbar ist.

2. Einrichtung nach Anspruch 1, dadurch gekennzeichnet, daß das Rohr (2) in die Wand (1) eines Absetzbeckens etwa waagrecht eingesetzt ist.

3. Einrichtung nach Anspruch 1 oder 2, dadurch gekennzeichnet, daß das Filtermaterial (13) für die Filterung kleinster Feststoffpartikel geeignet ist.

4. Einrichtung nach einem der Ansprüche 1 bis 3, dadurch gekennzeichnet, daß der Antrieb (8, 9) aus einem von einem Motor (8) angetriebenen Ritzel (9) besteht.

5. Einrichtung nach einem der Ansprüche 1 bis 4, dadurch gekennzeichnet, daß die Zuführungen (18) für die Druckluft im Inneren des Rohres(2) geführt sind.

6. Einrichtung nach einem der Ansprüche 1 bis 5, dadurch gekennzeichnet, daß die Düsenleiste (14) am Rohr (2) angeordnet ist.

7. Einrichtung nach einem der Ansprüche 1 bis 6, dadurch gekennzeichnet, daß die Düsenleiste (14) einzelne Bohrungen (15) aufweist, die die Druckluft dem Filtermaterial (13) zuführen.

8. Einrichtung nach einem der Ansprüche 1 bis 7, dadurch gekennzeichnet, daß die Bohrungen (15) der Düsenleiste (14) über Kammern (17), die seitlich an der Düsenleiste (14) angeordnet sind, mit Druckluft gleichmäßig versorgbar sind.

9. Einrichtung nach einem der Ansprüche 1 bis 8, dadurch gekennzeichnet, daß die Düsenleiste (14) zum Filtermaterial (13) hingerichtete Dichtlippen (16) aufweist.

10. Einrichtung nach einem der Ansprüche 1 bis 9, dadurch gekennzeichnet, daß über der Düsenleiste (14) an der Außenseite des Filterkorbes (10) eine Absaugvorrichtung (23) für die Feststoffpartikel vorgesehen ist.

11. Einrichtung nach einem der Ansprüche 1 bis 10, dadurch gekennzeichnet, daß die Abdichtung des Rohres (2) in der Wand (1) des Absetzbeckens über einen Simmering (4) erfolgt.

12. Einrichtung nach einem der Ansprüche 1 bis 11, dadurch gekennzeichnet, daß die Abdichtung des Filterkorbes (10) an der Scheibe (5) über einen 0-Ring (11) erfolgt.
